# EUROPEAN PATENT APPLICATION

(11) **EP 0 678 684 A1**
(43) Date of publication of application: **25.10.1995**
(21) Application number: 95301550.0
(22) Date of filing: 09.03.1995
(51) Int. Cl.: F16D 41/07

(54) **Cage assembly of a one-way spray clutch**

(30) Priority: 20.04.1994 US 230352
(71) Applicant: BORG-WARNER AUTOMOTIVE, INC., Sterling Heights, Michigan 48311-8022 (US)
(72) Inventor: Rutke, Russell J., Palos Heights, Illinois 60463 (US); Malecha, Gregory J., Naperville, Illinois 60540 (US)
(74) Representative: Allden, Thomas Stanley

(57) **Abstract**

In a one-way clutch, sprags (18) with individual springs (26), are retained at their mid-radial position, in a cage assembly (22) comprising spaced annular rings connected by cam members (50) which have surfaces (52,54) for engaging the sprags (18) to limit their racking movement. The cage assembly (18) may comprise two parts (42').

## Description

### Technical Field

The invention relates to one-way sprag clutches with concentric races for controlling torque delivery in a torque flow path between a driving member and a driven member.

### Background Art

Conventional double cage sprag clutches contain two concentric metal or plastic cage rings that position the sprags for simultaneous actuation. The positioning of the sprags is accomplished by designing with precision the circumferential, radial and axial dimensions of both cage rings.

Although a double cage clutch design provides excellent performance in a one-way clutch system, it is inherently a complex assembly. The sprags of double cage clutches require close design tolerances and manufacturing control to meet application performance requirements.

Double cage clutches, such as those disclosed in Japanese patent documents 63-48035, 63-180731 and 1-120440, have two cage members to space inner and outer sections of each sprag between the clutch races. A resilient ring member is located between the two cage members. The resilient ring member includes tabs that function as springs to urge the sprags into a specific engagement angle relative to the races.

The tabs of such resilient sprag retainers have an inherent interdependency that can adversely affect the function of the clutch. Non-uniformity of the dimensions of the resilient member can result in an uneven loading of the independent sprags and inefficiency in the clutch operation. Furthermore, such clutch assemblies often require hand assembly, which is inefficient in high volume manufacturing operations.

Other one-way sprag-type clutches, such as the clutch disclosed in U.S. Patent No. 2,824,635, include a series of tiltable sprags disposed between a pair of concentric clutch races and a retainer that is formed as one continuous resilient ring. Such a sprag retainer functions to space the sprags and to urge the sprags into engagement with the races. A series of radial openings or windows is blanked into the ring, and tangs or tabs usually are formed as a part of the resilient ring. Such a sprag retainer functions to space the sprags and to urge the sprags into engagement with the races. The tangs or tabs, which are usually formed on one side of each window, provide a circumferential spring force that acts on the sprags. This design fails to provide adequate sprag position control.

Some clutches, such as those disclosed in Japanese patent document 63-112631, include independent spring loaded sprags, but such structures are complicated, costly, and not easily machine assembled.

Other clutches, such as the clutch disclosed in Brownhill Patent Re.29,985, dated May 8, 1979, permit sprag pop-out and lack protection against severe sprag angular movement. The design of Brownhill has the disadvantages of high overrunning drag and lack of energizing spring element protection against crushing.

### Summary Of The Invention

An object of the present invention is to provide an improved cage structure that combines functional features of a double cage assembly into one cage component.

Another object of the invention is to provide an improved one-way clutch having improved sprag support through a combined cage structure including a cam feature.

Another object of the invention is to provide an improved cage and sprag structure for a one-way clutch wherein each energizing element is independent, one with respect to the other, and each is adapted to act independently on an adjacent torque engagement member or sprag.

Another object of the invention is to provide an improved cage and sprag structure for a one-way clutch wherein the improved cage and independent sprag energizing elements uniformly position the sprags for rapid wedging engagement with the clutch races to improve performance.

A further object of the invention is to provide an improved cage and sprag structure for a one-way clutch wherein the one-way clutch is easy to assemble and lends itself to high degree of automated assembly.

In carrying out the above and other objects of the present invention, the improved cage and sprag structure is placed between a pair of opposed, substantially concentric races to establish an improved one-way clutch. The improved structure includes a series of tiltable sprags, tiltable in one direction into wedging engagement with both of the races for torque transmission and poised for engagement while freewheeling or while at rest.

The improved cage member is of a ring shape and is concentrically mounted between the races. It has a series of openings therein for receiving the sprags and for holding them in peripherally spaced relation between the races. A plurality of independent energizing spring elements is mounted about the cage. Each spring element has a mounting portion and a tang portion. The mounting portion is received in an opening in the cage. The springs bias the individual sprags by spring force into wedging engagement with the clutch races. The mounting portion attaches the spring element to the cage and the tang portion extends generally circumferentially.

The improved cage includes a cam member within each opening for supporting a respective sprag. The cam member includes axially extending contact surfaces that orient the sprags toward their position of engagement and their freewheel/overrunning position and all positions therebetween. In this way, the cam member allows the improved cage to combine the functional advantages of a double cage assembly into one component. Therefore, the improved cage is referred to as a combined cage.

The cam member also can be used to mount the independent energizing springs. The combined cage design "angles" the sprags in readiness for engagement during the freewheel/overrunning mode. As a result of the independent engaging springs and their attachment to the precise cam structures, the preferred cage and sprag structure is highly effective. Each cam member can be made of resilient or metallic materials.

The above objects and other objects, features, and advantages of the present invention are readily apparent from the following detailed description of the best mode for carrying out the invention when taken in connection with the accompanying drawings.

### Brief Description Of The Drawings

Figure 1 is a perspective, schematic view of an improved cage and sprag structure constructed in accordance with the present invention.

Figures 2-5 are sectional, schematic, perspective views of the cage and a sprag structure illustrating various independent energizing elements mounted on the cage for independently urging adjacent sprags.

Figures 6 and 6A are partial, schematic, sectional views of a prior art double cage and sprag structure with the sprags in the locking position and in the freewheeling position, respectively.

Figure 7 is a partial sectional view of a prior art single cage and sprag structure illustrated in a freewheel position of the cage and sprags.

Figure 8 is a partial sectional view of another prior art design having a single cage ring.

Figure 9 is a partial sectional view of one embodiment of the present invention.

Figures 10 and 10A are partial sectional views of another embodiment of the combined cage of the present invention, including cam members, illustrating sprags in a freewheel position and in an engaged position, respectively.

Figure 11 is a partial, sectional view of the combined cage, similar to the view shown in Figure 9, illustrating the arrangement of adjacent cam surfaces.

Figure 12 is a perspective view of the combined cage and sprag structure of the present invention shown in Figures 9 and 11.

Figure 13 is an enlarged partial, sectional, perspective view of a cam member and sprag in another combined cage embodiment illustrating an energizing element having a C-clip spring configuration mounted on the cam member for biasing a sprag.

Figure 14 is an enlarged partial, sectional, perspective view, like that of Figure 13, illustrating an energizing element of an elastomeric construction mounted on the cam member for biasing a sprag.

Figure 15 is an enlarged partial, sectional, perspective view, like that of Figure 14, illustrating an energizing element of a Z-spring construction mounted on the cam member for biasing a sprag.

Figure 16 is an exploded perspective view of the two-piece cage construction, shown also in Figures 9 and 11, which facilitates cage, sprag and energizing spring element assembly.

Figure 17 is an enlarged partial sectional view of the two-piece cage of Figure 16 comprising a snap welded assembly of separate cage pieces.

### Best Mode For Carrying Out The Invention

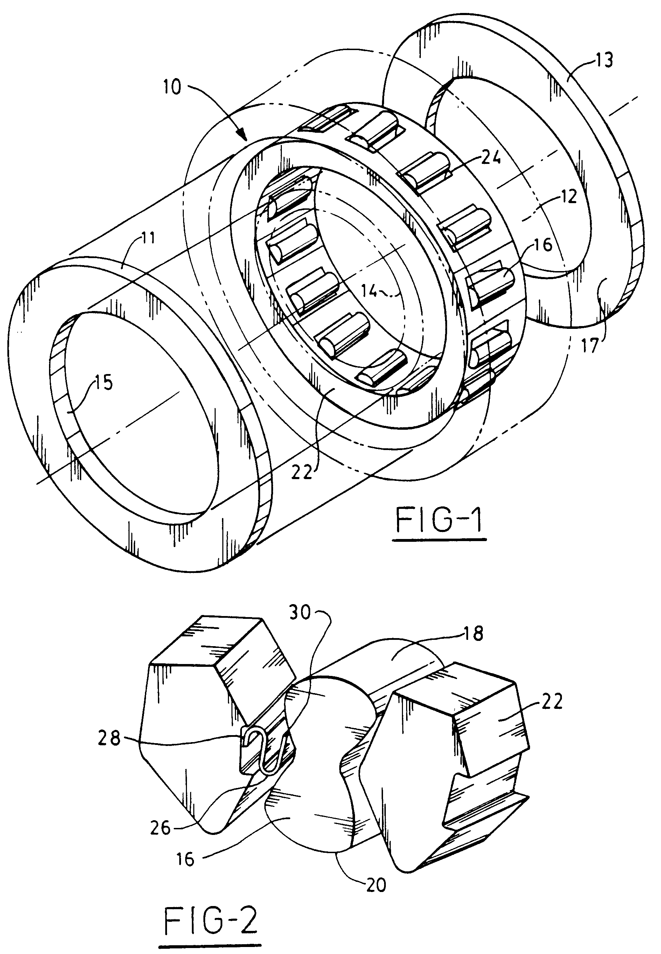

Referring to Figure 1 of the drawings, an improved cage and sprag structure for a one-way clutch constructed in accordance with the present invention is generally indicated by reference numeral 10. It is used to rapidly transmit torque between rotating members. As hereinafter more fully described, the cage and sprag structure provides improved performance and also lends itself to high levels of automated assembly.

As shown in Figure 1, the improved cage and sprag structure 10 is placed between an outer race 12 and an inner race 14, shown in phantom. The races are substantially cylindrical and concentrically mounted. The races are adapted to be respectively connected to separate rotatable members (not shown). A plurality of torque engagement members or sprags 16 is disposed between the races 12 and 14, each sprag being provided with a pair of eccentric wedging surfaces 18 and 20 for wedging against the inner and outer races 12 and 14, respectively, as it is tilted into engagement with the races. The wedging surfaces are formed on the radially inner and outer portions of the sprag. The circumferential dimensions of these inner and outer portions are greater than that of the intermediate portion thereof.

A cage 22, illustrated in Figures 1-5, is adapted to be installed between the races 12,14. Cage 22 retains and spaces the sprags 16 peripherally between the races. Cage 22 has a ring shape and has a series of openings or windows 24 spaced around its periphery for receiving the tiltable sprags 16. Cage 22 also includes independent energizing elements 26, best seen in Figures 2-5, that are retained in the openings 24.

Our improved clutch construction may include end bearings 11 and 13 located on either or both sides of the structure 10 as shown in Figure 1. Each end bearing has an outer peripheral surface that registers with the inner cylindrical surface of out race 12. The inner peripheral surface 15 of bearing 11 and the corresponding inner peripheral surface of bearing 13 may be piloted on the outer cylindrical surface of inner race 14. The radial side surface 17 of bearing 13 and the corresponding side surface of bearing 11 are adapted to engage the axially spaced ends of cage 22 so that thrust loads may be accommodated.

The end bearings 11 and 13 provide radial spacing control, thus achieving concentricity of the races. The bearings also provide a lubrication oil dam which controls the lubrication oil outflow from the clutch as lubrication oil collects in the region occupied by the sprags.

Either one or two end bearings may be used, depending upon the application. In either case, race concentricity may be obtained and the lubrication oil retention feature of the end bearings may provide clutch lubrication and oil flow directional control in the transmission system.

Severe angular movement of the sprags is controlled in the freewheel and engagement positions by inner and outer cam surfaces, which imitate a double cage function. This angular movement control is not satisfied by prior art designs, such as the previously discussed design of Patent Re. 29,985.

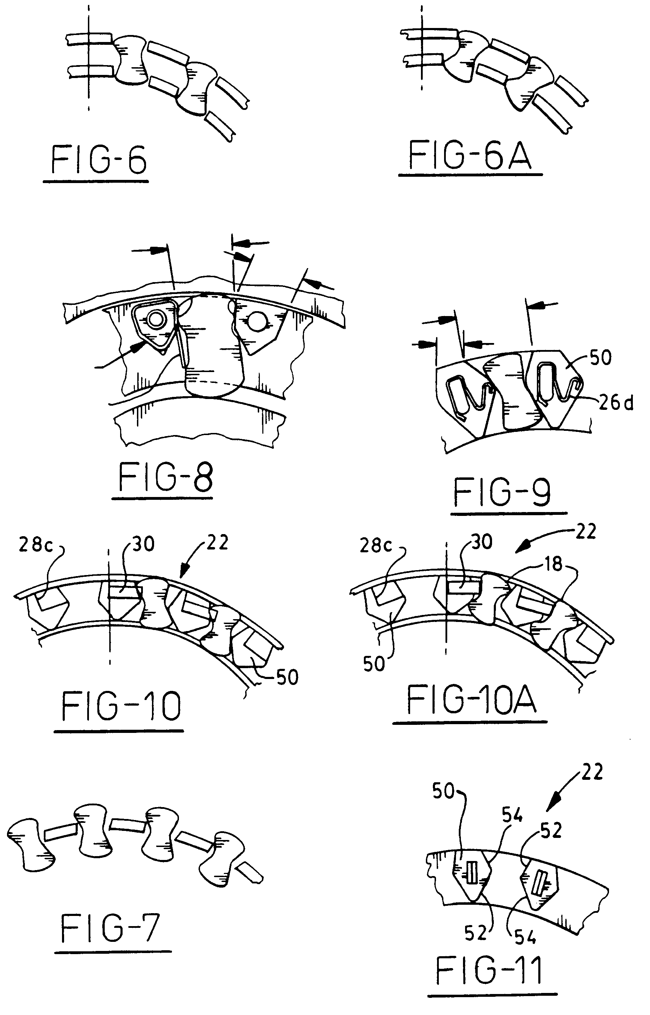

Sprag engagement and freewheel control is improved compared to the control achieved by prior art designs, such as that shown in Figure 8, by positioning cam surfaces adjacent to the sprag center of gravity. Further, spring protection is provided by pockets in the cage cams, preventing crushing.

These energizing elements 26 are formed from metal or composite materials as individual components. Each energizing element 26 includes a mounting pocket portion 28 and a tang portion 30. The mounting pocket portion 28 attaches the element 26 to the cage, as seen in Figure 2, and the tang portion 30 circumferentially extends within an opening 24. Each element 26 thereby acts independently on an individual sprag 16 received in an opening 24.

Precise forming of each individual energizing element 26 contributes to the overall performance of the one-way clutch. Such elements 26 provide and maintain a more uniform individual loading against the sprags 16 than the loading that would result from energizing springs on a resilient ring or band-type retainer spring of conventional design.

Further, overrunning drag torque is reduced compared to the drag torque present in prior art designs, such as the prior art design of Figure 8. This is due to the relatively reduced area of contact between the sprags and the cams and the reduced sliding action at each sprag and cam interface.

Although the advantages of the improved cage and sprag structure can be obtained with metallic assemblies using such materials as steel, aluminum or bronze, it is preferable for the cage 22 to be comprised of a high temperature, engineered plastic such as polyetherimide or nylon or polyethersulfone (PES). Such engineered plastics can be reinforced with reinforcing materials such as carbon fibers or glass or clay or mica to increase the overall mechanical characteristics of the plastic.

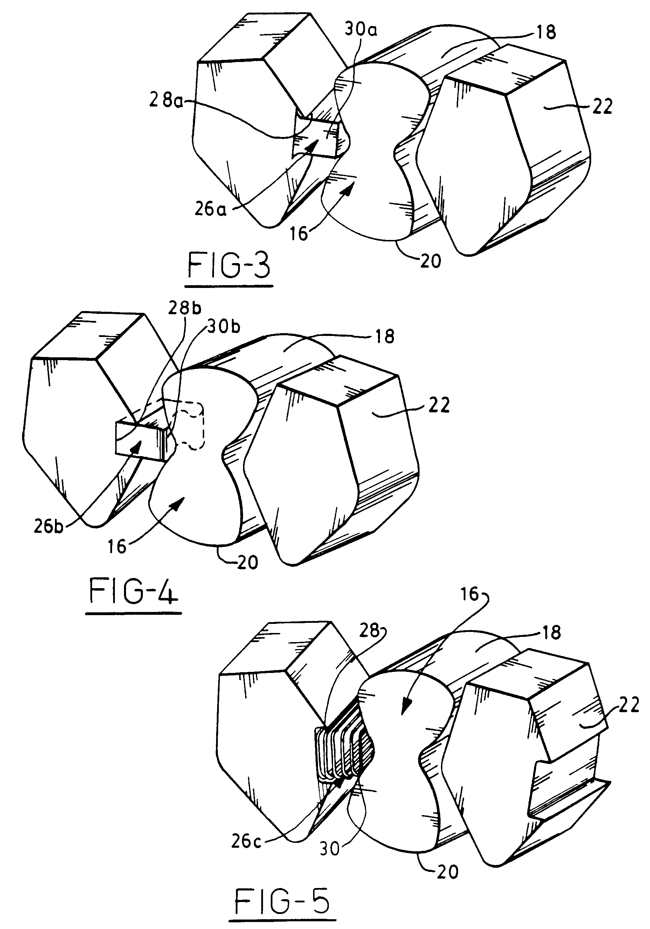

Figures 2-6 illustrate various embodiments of the improved cage and sprag structure 10. Figure 2, as explained previously, illustrates a metallic energizing element 26 having a mounting pocket portion 28 and tang portion 30 circumferentially extending within the opening 24 of the cage 22. As illustrated, the cage 22 has portions located between the windows 24. They have a deep radial rectangular cross-section, which lends greater support to the sprags 16. Figure 5 shows a coil spring type energizing element 26c with an active end 30.

Figures 3 and 4 illustrate energizing elements 26a and 26b, respectively, comprised of high temperature elastomers such as nitryl rubber or silicone or fluoroelastomers or polyacrylate or neoprene or polyurethane. These elements are mounted by the respective mounting pocket portions 28a and 28b in the cage 22. Their tang portions 30a and 30b circumferentially extend within the respective openings 24. The pocket portions in the cage cams prevent crushing of the elastomeric spring elements.

As illustrated in Figures 1-5, cage 22 has a wide radial cross-sectional shape. This shape gives more support to the sprags 16 and eliminates the need to provide a cage having two concentric ring members as in the case of the prior art designs disclosed in the Japanese patent documents identified above. This shape also allows for control of the sprags at the inner and outer edges as in the case of the double cage designs of the prior art. This shape also facilitates the mounting of the metal or elastomeric energizing elements.

Figures 10 and 10A illustrate the cage 22 wherein cam members 50 with radially enlarged pocket portions 28e. The cam members 50 extend into the openings 24 of the cage to provide support for the sprags 16 in their positions of engagement as well as in their freewheel/overrunning positions as seen in Figures 10 and 10A, and all positions therebetween. This characteristic is found also in the embodiments of the invention shown in Figures 9 and 11-16. In comparison, Figures 6, 6A and 7 illustrate the corresponding positions for prior art cage and sprag structures.

In Figure 7, a single cage prior art design is illustrated. It can be seen in Figure 7 that sprag control or support is minimal because the cage provides only very limited angular control of the sprags when the sprags approach their engaged position as they are tilted in one direction and when the sprags approach their freewheel positions as they are tilted in the opposite direction. The combined cage design, in contrast, is an improvement of this design as well as an improvement in prior art designs such as the prior art design of Figure 8 by reason of the cage control of the sprag positioning.

In Figure 10, the sprags 16 are shown supported by cam members 50 in the freewheel or overrunning position. In Figure 10A, the sprags are shown supported by cam members 50 in the engaged position. It thus becomes apparent that the cam member 50 allows the combined cage to possess at least all the sprag control found in the double cage design.

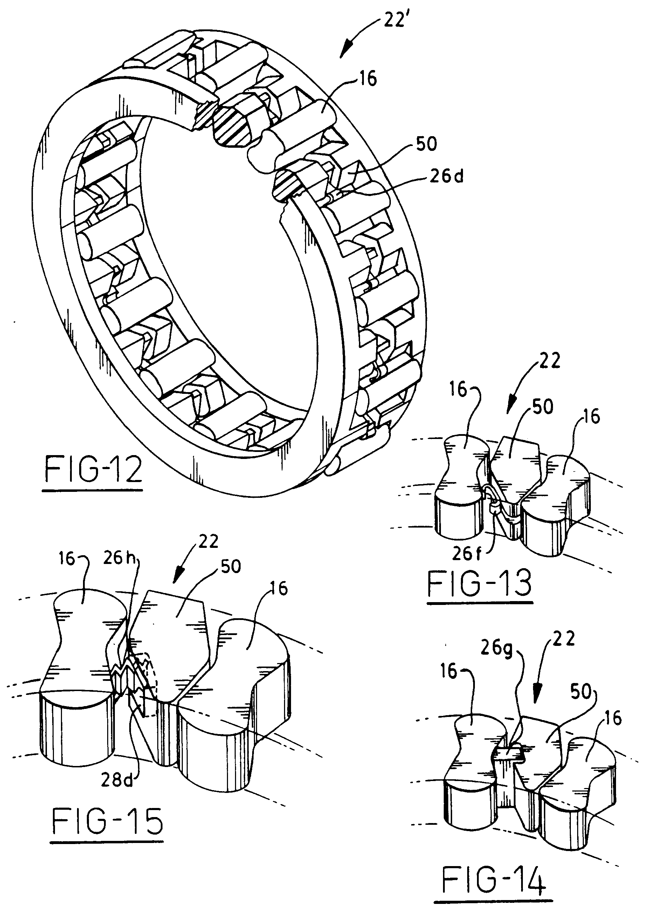

As shown in Figures 11 and 12, each pair of cam members 50 includes engaging surface portions 52 and freewheel surface portions 54 that provide sprag 16 support along the body of the sprag. When the cage 22 is inserted between a pair of clutch races, the clutch will meet or exceed the performance of a conventional double cage clutch. It can be appreciated that while cam members 50 limit extreme angular positioning of the sprags 16, once the cam members position the sprags into engagement with respective inner and outer clutch races, the cam members do not inhibit sprag/race cooperation. Each cam member is located adjacent the narrow intermediate portion of the adjacent sprag where it is protected against overstressing as the radially inner and outer portions of the sprags engage the cam members.

As illustrated in Figures 13-15, cam members 50 extend axially and provide a sufficient surface to support sprags 16. Cam members 50 also eliminate latching or "pop-out" of the sprags 16 through the cage windows. Prior art designs of the single cage or double cage type all share a design shortcoming that results in latching or "pop-out". This is overcome by the present improved combined cage design.

The combination of the improved cage design and the individual energizing elements serve to angle the sprags 16 in the engagement direction during the freewheel/overrunning mode of operation. The attachment of the spring elements to the cam members 50 increases the total effectiveness of the one-way clutch design. The independent energizing elements, while providing forces on the sprags equivalent to the forces exerted by a band spring in a double cage clutch design, provide more opportunity for increased levels of automated assembly.

Figure 13 illustrates an independent C-clip type spring energizing element 26f.

Figure 14 illustrates an elastomeric-type independent energizing element 26 as hereinabove described.

Figure 15 illustrates a Z-spring type independent energizing element 26h in spring pocket 28d.

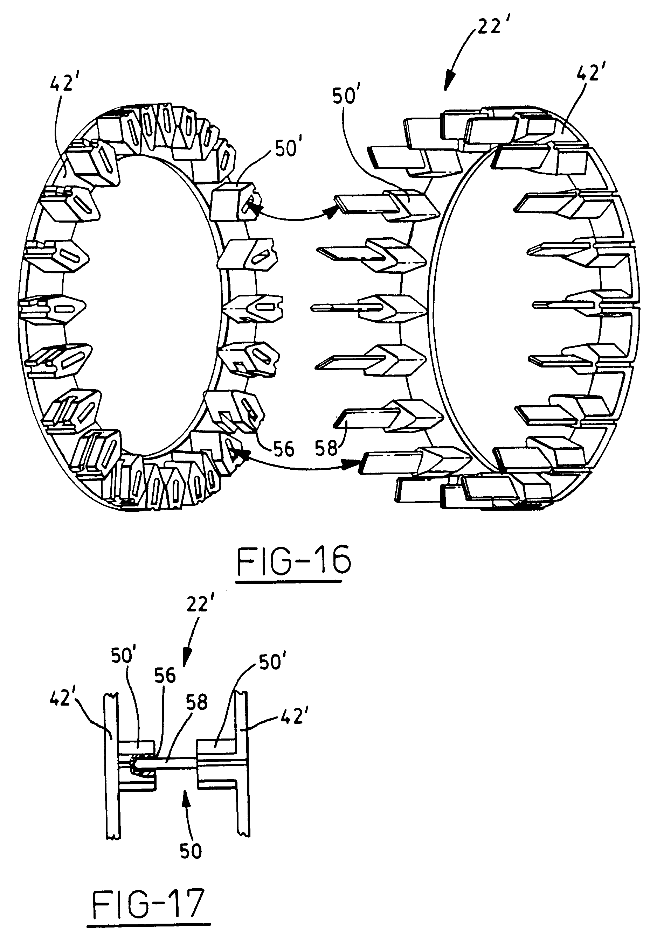

In Figure 16, cage 22' is illustrated as a two-piece construction. Each piece defines half of the cage and has a flange section 42' and an axially extending cam member portion 50'. At the distal ends of the cam member portions 50', there are provided mating connecting members 56 and 58 which allow the two pieces to be connected together as shown in Figure 17. As illustrated in Figures 9 and 16, connected cam member portions 50' include a portion for mounting the energizing spring members 26d therein. The springs 26d are seen in Figure 9. This mounting portion is configured for the type of energizing spring element used.

The central location of the cams provides a stronger cross-section than in the case of single-ring prior art designs due to cam surfaces that extend inward in the combined cage.

The two-piece construction, best seen in Figures 16 and 17, facilitates automated assembly and allows the sprags 16 and energizing spring elements to be mounted on one half of the cage 22' before the other half of the cage is connected to the first half. This type of assembly is preferred over a one-piece construction for the benefit of assembling access for sprags and springs.

Preferably, the two-piece plastic cage 22' is of plastic construction. Each piece can be molded separately with axially drawn dies, but they may be made also by other manufacturing techniques. Alternatively, cage 22' can be of metal construction or of a combination of metal and plastic; e.g., member 58 may be formed of metal and member 56 may be a part of the cam member portion 50'. The metal construction may be made by forming or by using powdered metal technology.

Figure 9 illustrates how an increase in capacity, in comparison with prior art designs, is achieved with a narrow cam dimension or arc at the outside diameter. Prior art designs have a wide arc and a narrow window, as seen in Figure 8. The Figure 8 design does not include a narrow waist section on the sprag for locating the cage cams, spring mounts, and cage joining pins. The improved combined cage of the present design places the bulk of the cam and spring mount at the midsection of the sprags to permit maximum sprag cam rotation at inner and outer race contact portions.

While the best mode for carrying out the invention has been described in detail, those familiar with the art to which this invention relates will recognize various alternative designs and embodiments for practicing the invention within the scope of the following claims.

## Claims

1. A combined cage and sprag structure for a one-way clutch comprising:
a cage having axially spaced cage rings, axially extending cam members joining said cage rings and spaced about the periphery of said cage, a series of tiltable sprags between said cam member;
each adjacent pair of cam members defining a window for receiving a sprag, the radially outward region of said window and the radially inward region of said window being wider in a peripheral direction than the radially intermediate region of said window;
the portion of said sprag intermediate its radially inner and radially outer extremities being engageable with said members at said radially intermediate region of said window;
cam surfaces on said cam surfaces engageable with said radially inner and radially outer extremities of said sprag upon tilting motion of said sprag toward engaged and disengaged positions; and
an energizing spring for each of said sprags secured to each cam member and adapted to engage an adjacent sprag at its intermediate position thereby imparting a sprag energizing torque to said sprags.

2. An overrunning clutch comprising concentric outer and inner races, a sprag cage disposed between said races;
said cage assembly comprising axially spaced rings, cam members extending between said rings, said cam members defining therebetween peripherally spaced windows;
sprag members located in said windows, each sprag member having a radially inner clutch surface and a radially outer clutch surface engageable respectively with said inner and outer races;
cam surfaces on said cam members on opposed sides of each of said sprag members, the circumferential width of each sprag member at a location intermediate the inner and outer clutch surfaces being less than the circumferential width at locations thereof adjacent said inner and outer clutch surfaces;
said cam members being engageable with each sprag member at said intermediate location thereof, thereby preventing peripheral translation of said sprag members as said sprag members tilt about their intermediate locations;
said sprag members being engageable with said cam surfaces at said sprag locations adjacent said inner and outer clutch surfaces when said sprag members are tilted to a limiting angular position; and
individual energizing springs secured at one end thereof to said cam members, an active portion of each spring engaging an adjacent sprag member at said intermediate location thereof, thereby imparting a continuous moment on said sprag member to maintain the clutch surfaces thereof in contact with said races.

3. The combination as set forth in claim 1 wherein said cam members are formed on one circumferential side thereof with a spring pocket, one end of each of said springs being anchored in an adjacent spring pocket, whereby crushing of said springs is avoided upon tilting movement of said sprags toward a limiting angular position.

4. The combination as set forth in claim 2 wherein said cam members are formed on one circumferential side thereof with a spring pocket, one end of each of said springs being anchored in an adjacent spring pocket, whereby crushing of said springs is avoided upon tilting movement of said sprag members toward a limiting angular position.

5. The combination as set forth in claim 1 wherein the minimum circumferential width of said windows is less than the circumferential width of said sprags at said radially inner and outer extremities of said sprags;
said cage rings being formed in separate parts, said cam members being adapted to join said cage rings together to form a unitary cage and sprag assembly following assembly of said sprags in said windows.

6. The combination as set forth in claim 2 wherein the minimum circumferential width of said windows is less than the circumferential width of said sprag members at said radially inner and outer extremities of said sprag members;
said cage rings being formed in separated parts, said cage rings being adapted to join said cage rings together to form a unitary assembly of said cage and sprag members following assembly of said sprag members in said windows.

7. The combination as set forth in claim 2 wherein said cage assembly includes two connectable cage pieces, each cage piece including one of said cage rings and axially extending cam member portions and means for mating said cage pieces together to form a one-piece cage assembly.

8. The structure of claim 2 wherein said cage has a cross-section of a generally rectangular shape defined by said spaced rings connected by said cam members.
